# EUROPEAN PATENT SPECIFICATION

(11) **EP 2 289 655 B1**
(45) Date of publication and mention of the grant of the patent: **19.06.2019**
(21) Application number: 10173265.9
(22) Date of filing: 18.08.2010
(51) Int. Cl.: B23B 41/00

(54) **Apparatus and tools for use with compressors**
Vorrichtung und Werkzeug zur Verwendung mit Kompressoren
Appareil et outils à utiliser avec des compresseurs

(30) Priority: 26.08.2009 US 547685
(43) Date of publication of application: 02.03.2011
(73) Proprietor: General Electric Company, Schenectady, NY 12345 (US)
(72) Inventor: Holmes, James B., Greenville, SC 29615 (US); Corn, Randall S., Travelers Rest, SC 29690 (US); Herbold, John W., Fountain Inn, SC 29644 (US)
(74) Representative: Freigutpartners IP Law Firm

(56) References cited:
- DE-A1- 2 853 488
- US-A- 4 329 094
- US-A- 5 482 411
- US-A1- 2005 198 821
- US-B1- 7 029 371

## Description

### BACKGROUND OF THE INVENTION

The present invention relates to compressors and particularly relates to apparatus for repairing or upgrading components in compressors, in particular it relates to a tool according to the preamble of claim 1.

In axial flow compressors, stator vanes alternate with rotating blades or buckets in the various stages of the compressor. The stator vanes are circumferentially spaced one from the other about the compressor axis and are secured to the upper and lower compressor casing halves. The upper and lower casing halves are joined one to the other at the compressor midline and provide a complete circumferential array of stator vanes for each compressor stage. As each rotating blade mounted on the rotor completes each revolution at a given rotational velocity, the rotating blade receives aerodynamic excitation pulses from each stator vane. This pulse can be generated from the wake of the upstream stator vane or the bow wave of the downstream stator vane. It is also possible to generate excitations in the rotating blade from differences between the upstream and downstream stator vane counts. These pulses induce a vibratory response in the rotating blade that can be deleterious to the rotating blade causing failure due to high cycle fatigue.

Typically the stator vane or blade count in the upper and lower halves of the compressor casing for a given stage are equal in number to one another. For example, in an initial stage S0 of a given compressor, the blade count for the stator vanes in each of the upper and lower compressor casing halves may be 24/24. In the next stage S1, the blade count may be 22/22. The first number represents the number of stator vanes in the upper casing half and the second number represents the number of stator vanes in the lower casing half of the same stage. The total stator vane count in S0 and S1 is therefore forty-eight and forty-four stator vanes respectively. However, because of the vibratory responses of the rotating blades, non-uniform vane spacings between upper and lower casing halves have been used in the past. Thus, different and alternative upper and lower blade counts in succeeding stages have been provided to reduce or eliminate the vibratory response. For example, in one compressor, stages S0 and S1 have had vane counts of 24/23 and 23/24, respectively. These non-uniform blade counts have been used in original equipment manufacture.

There are, however, a significant number of compressors in use in the field where there is an equal number of stator vanes in the upper and lower compressor halves for given stages. Certain other compressors in the field have an unequal number of stator vanes in the upper and lower compressor halves with adjacent stages, e.g. S0 and S1, having equal numbers of blades but alternate blade counts between the upper and lower halves of the compressor casing. Changing blade counts in the field was not previously considered practical since costly removal of the rotor in the field was required.

Because the rotor is closely fitted to the middle and aft (or rearward) sections of the compressor, it is geometrically difficult to reach the areas where the blades reside or to drill, tap, and counter-bore load dam pin holes in the area desired. Additionally, the current known methods for removal of these blades increase the likelihood that the rotor, stator blades or adjacent hardware may be damaged during the removal process. Moreover, the extended reach and limited access to the stator blades being removed underneath the rotor and rotor blades creates an ergonomic issue potentially leading to operator injury.

United States Patent No. 5482411 discloses a tool in accordance with the preamble of claim 1 and describes a device utilizing positive and negative fluid pressure and the plurality of tandem operating components for securely clamping a drill motor to a drill plate in order to drill precisely positioned holes in a workpiece includes an annular mandrel and annular collet concentrically disposed about the cutting tool. A first end of the collet includes a plurality of longitudinally extending fingers while the mandrel has a tapered end portion having a larger external diameter than the center cylindrical portion of the mandrel. A plurality of pistons are coaxially disposed about the cutting tool and within piston subchambers defined within the piston housing of the clamping device to extend and retract the mandrel and the collet. Once extended, the longitudinally extending fingers of the collet overlie the center cylindrical portion of the mandrel. Thus, the clamping device may be inserted through an aperture defined in a drill plate. Following its retraction, the longitudinally extending fingers of the collet overlie the tapered end of the mandrel and are correspondingly expanded. The expanded fingers engage the aperture defined by the drill plate to securely clamp the drill motor to the drill plate. The device also includes lubricant-coolant delivery and vacuum collection of chip swarf and self-cleaning features.

### BRIEF DESCRIPTION OF THE INVENTION

The present invention resides in a tool for use in at least one of drilling, tapping, back spot facing and counter-boring at least one hole, as recited in the appended claims.

### BRIEF DESCRIPTION OF THE DRAWINGS

There follows a detailed description of embodiments of the invention by way of example only with reference to the accompanying drawings, in which:
FIG. 1 is a schematic illustration with parts broken out for clarity of the upper half of a compressor illustrating various compressor stages;
FIG. 2 is a perspective view of stage S0 and stage S1 with rotating blades or buckets therebetween, illustrating the different blade counts in the upper and lower compressor halves of these stages;
FIG. 3 is a schematic end view illustrating a compressor having an equal stator vane count in both upper and lower halves of the compressor stage; and
FIG. 4 is a schematic illustration of the removal of the upper compressor half;
FIG. 5 is a cross-sectional illustration of a tool that can be used to drill, tap, back spot face and counter-bore holes for load dam pins, according to an aspect of the present invention;
FIG. 6 is a cross-sectional illustration of a drill unit skid that may be used in conjunction with the tool of FIG. 5, according to another aspect of the present invention;
FIG. 7 is a cross-sectional illustration of the tool of FIG. 5 mounted on the drill unit skid of FIG. 6, according to a still further aspect of the present invention;
FIG. 8 is a cross-sectional illustration of the tool deployed under a rotor, according to an aspect of the present invention; and
FIG. 9 is a block diagram of a power and control system that may be used in conjunction with the tools of FIG. 5 and FIG. 6, according to an aspect of the present invention.

### DETAILED DESCRIPTION OF THE INVENTION

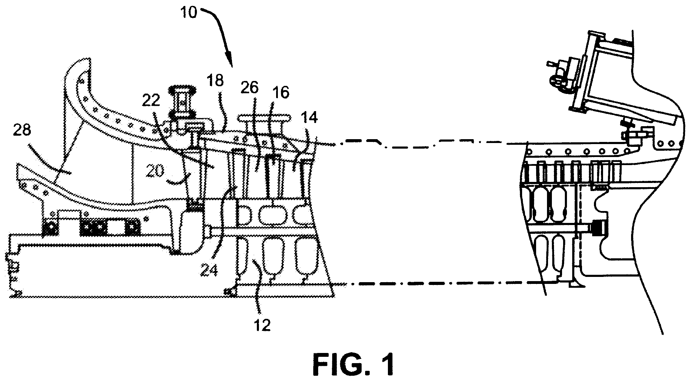

Referring to FIG. 1, there is illustrated an upper half of a compressor generally designated 10. Compressor 10 includes a rotor 12 mounting buckets or blades 14 for rotation about the axis of the compressor and stator vanes 16 fixed to the upper casing half 18. It will be appreciated that the blades 14 of the rotor are circumferentially spaced one from the other about the rotor axis and that the stator vanes 16 are similarly circumferentially spaced one from the other about the axis. The vanes and buckets form various stages of the compressor. For example, the vanes 20 and buckets 22 constitute compressor stage S0 while the vanes 24 and buckets 26 constitute stage S1. Inlet guide vanes 28 are also illustrated in FIG. 1.

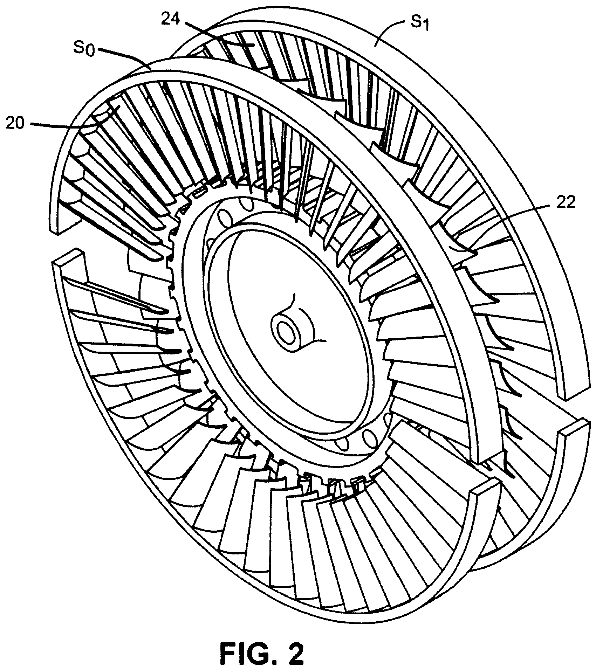

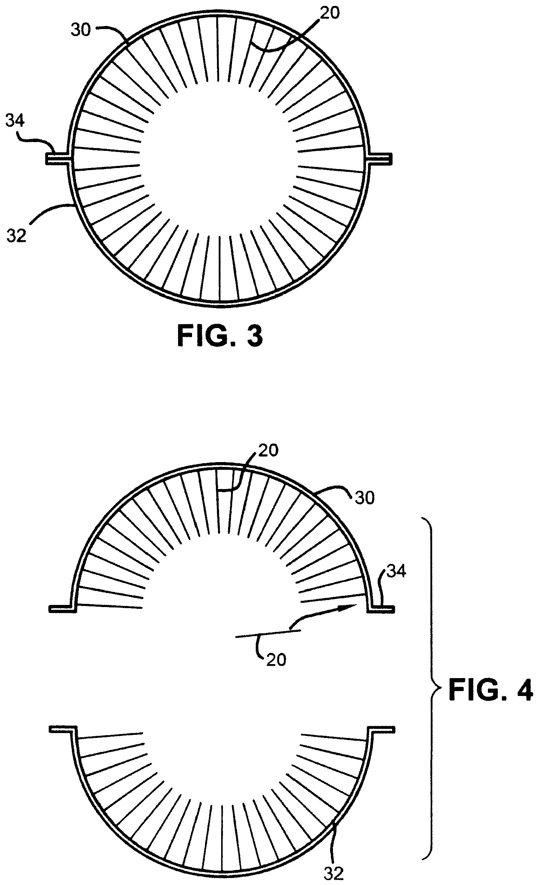

Referring to FIG. 2, there is schematically illustrated the stator vanes 20 of stage S0 and the stator vanes 24 of stage S1. The buckets 22 mounted on the rotor 12 are illustrated disposed between the stator vanes 20 and 24. The stator vanes 20 and 24 as well as stator vanes of other stages are typically attached to the upper and lower casing halves, schematically illustrated at 30 and 32 respectively in FIGS. 3 and 4. The upper and lower halves of the compressor casing may be secured at the horizontal midline to one another by bolted flanges 34 which enable the upper half 30 of the casing to be removed from the lower half 32 with the rotor retained in the lower half. The upper and lower halves of the stator vanes 20 and 24 illustrated in FIG. 2 are shown separated from one another for clarity.

Compressors and their associated components may need to be repaired or upgraded during their service life. In some applications it may be desired to replace stator vanes with vanes having a new shape or profile and/or grouping configuration. Some known processes currently require the removal of the rotor, which significantly increases outage duration and cost. An apparatus, according to aspects of the present invention, utilizes an iterative process for removing single stator blades with the rotor in place. This in-situ process greatly facilitates upgrading or repairing the compressor as the previous known method required removing the rotor.

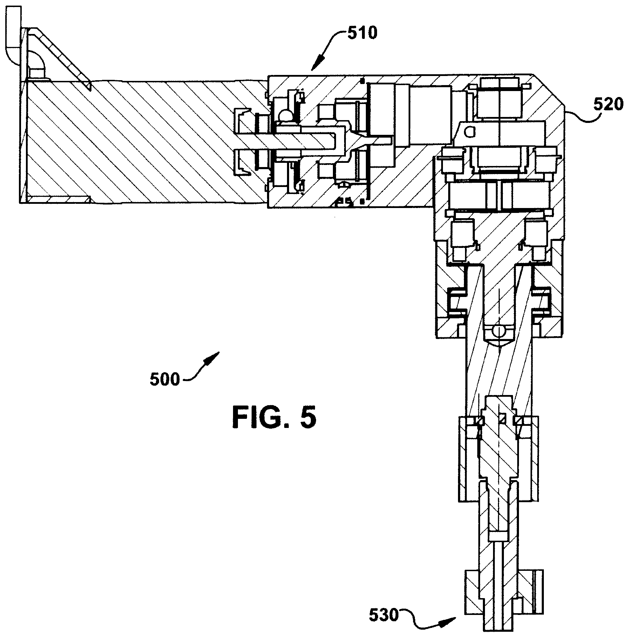

FIGS. 5-7 illustrate an apparatus, according to aspects of the present invention, that can be used to at least one of drill, tap, back spot face and counter-bore the load dam pin holes in the compressor case with the rotor in place or in-situ. The apparatus or tool may be designed to utilize the hook fit area where the blades reside to locate and navigate the tool during use. The hook fit or "T" slot is an area of the compressor case that is designed to guide and hold the stator vanes or stationary components in their relative position in the compressor. The hook fits can be an array or series of circumferential grooves disposed on the inward surface of the compressor case, and span the various stages of the compressor. This hook fit can vary in size in different portions of the compressor, and may be designed to accommodate segmented as well as single blades. The hook fit positions the stationary components both axially and radially for correct positioning relative to the rotating blades found on the rotor.

After the removal of the stator vanes in the axial compressor portion of a gas turbine, load dam pins may be installed as an upgrade option. According to aspects of the present invention, the holes for the load dam pins may be drilled, tapped, back spot faced and counter-bored with the rotor in place or "in-situ' to allow for the installation of the load dam pins. The purpose of the pins is to equally distribute the aerodynamic load circumferentially at strategic locations for the stator vanes. The tool may be used with any dynamoelectric machine, including, but not limited to compressors, gas turbines or steam turbines.

FIG. 5 illustrates a cross-sectional view of a drill 500, according to an aspect of the present invention, that can be used to drill, tap, back spot face and/or counter-bore the load dam pin holes in the compressor case with the rotor in place or in-situ, thereby significantly reducing outage duration and cost. The drill 500 may utilize a motor 510 and gearbox 520 to spin a drill bit or cutting tool 530, tap, back spot face and counter-bore. The motor 510 may be electrically, hydraulically or pneumatically powered. The drill 500 can use hydraulics or pneumatics (e.g., compressed air) to actuate the drill 500 in the "Z" plane creating the motion to drill and penetrate the compressor case.

The drill unit 500 may be comprised of an electric servo motor 510 attached through an adaptor plate to a right angle gearbox 520. This unit provides the power to perform all cutting operations during the load drilling process. All cutting operations, drilling, back spot facing, counter boring and tapping are achieved through the use of cutting tooling connected to this drill unit. The unit may also be equipped with two hydraulic double acting cylinders that provide the forces necessary to apply pressure to the drill, spot face cutter and tap for advancing and retracting the tooling through the casing material.

In addition to the advance and retracting double acting cylinders the unit may have two hydraulic cylinders that provide the clamping force required to hold the unit radially during the drilling operations. This clamping is accomplished by actuating the cylinders to apply a radial inward force on the drill unit to hold it against the hook fit during the drilling, spot facing and tapping operations. The unit may include another hydraulic cylinder that is attached to a locating or shot pin which when actuated provides the circumferential location of the drill unit by locating in the drill unit mount or in a previously drilled hole.

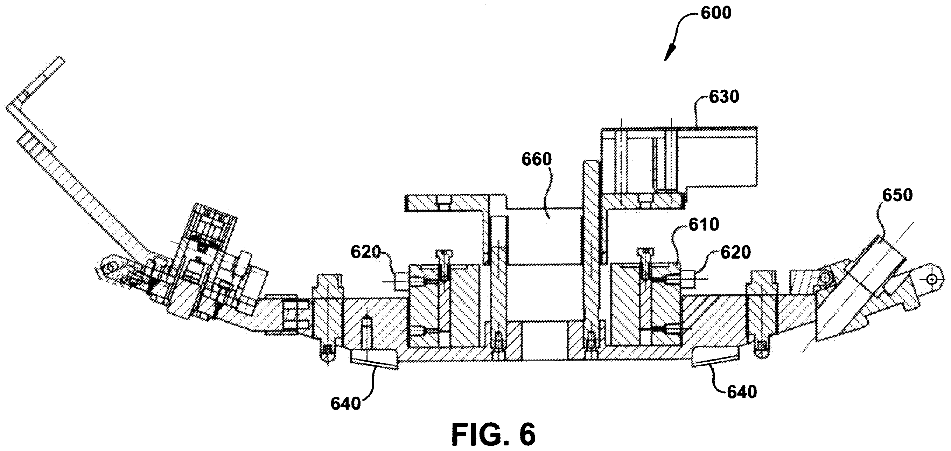

FIG. 6 illustrates a perspective view of the drill unit skid 600, which may be combined with the drill 500. The drill unit skid 600 can be used with the hook-fit slot to position and retain itself in the axial direction "X" plane relative to the compressor and to accurately locate the holes in the in the desired location circumferentially in the "Y" position and relative to the horizontal joint. The drill unit skid unit 600 includes an air manifold 610, a number of air supply hose connections 620, a pneumatic or hydraulic drill stroke actuator 630, hook fit slides 640 and vacuum port 650.

A central opening 660 is provided to accept the drill 500. The drill 500 rests on the drill stroke actuator 630 and is configured for movement in the "Z" plane. The vacuum port 650 may be attached to a vacuum device and is utilized to evacuate material generated during the drilling process.

The drill unit skid 600 serves as the mounting fixture for all devices for the drill unit. Some of the notable features are the hook fit slides or feet 640 and clamping actuators. The feet serve two main functions, they guide the skid 600 along the hook fit 833 and position the drill 500 in the axial direction and when the clamping actuators are energized they act as a stop in the radial direction to push against. The feet 640 are sized so that there is enough clearance for the sliding motion needed but not enough to allow the unit to escape the hook fit area in the radial or axial directions. The skid 600 may also be equipped with two attachment points for pinning the operator control/push rods 810 and the vacuum system. Loops may be located on each end of the unit to attach the control/push rods that are used by the operators to push and pull the unit along the hook fit during all operations. On the forward end the loop may be used to attach a vacuum attachment to remove cutting debris and chips generated during the various processes.

The pinning process can be accomplished by mating the rods and vacuum attachment on either end and inserting a ball pin through all pieces and thus attaching the rods and vacuum attachment to the skid. The skid also serves as an attachment point for a protective hose which houses the hydraulic lines that power the unit. This can prevent inadvertent disconnection of the hydraulic hoses from the unit and protects the hydraulic lines from nicks and scuffs during the operation of the unit.

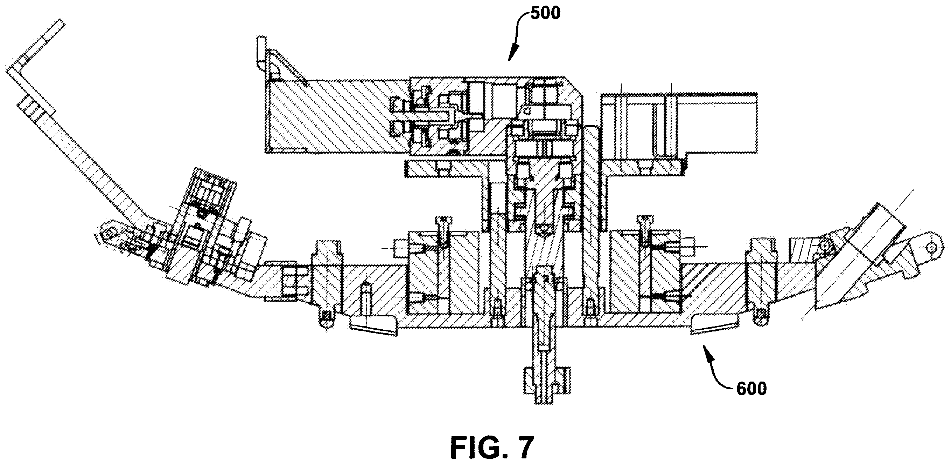

FIG. 7 illustrates a perspective view of the drill 500 mounted on drill unit skid 600. The drill 500 and skid 600 can employ a work rest to lock and retain itself in the circumferential direction while drilling, tapping, back spot facing or counter-boring and all may be executed with the rotor in place or in-situ. The combined unit may also be supplied with a control unit or programmable logic controller (PLC) (not shown). The PLC controls the cutting functions and logic for the drilling operations, and limits drilling, tapping, back spot facing and counter boring activities such as feed speeds and rotation of the drilling head based on operator selection on the operator panel (not shown). This functionality prevents undesired conditions, such as running a tap in the drill mode.

The PLC may also have logic built into it to automatically pulse the drilling operation in such a way as to break the drilling into short bursts to control the length of the drill chips. This logic may help in evacuating the drill chips for the vacuum system (not shown). Too large of a chip cannot be removed by a normal vacuuming operation.

The tool may be used with any dynamoelectric machine, including, but not limited to compressors, gas turbines or steam turbines.

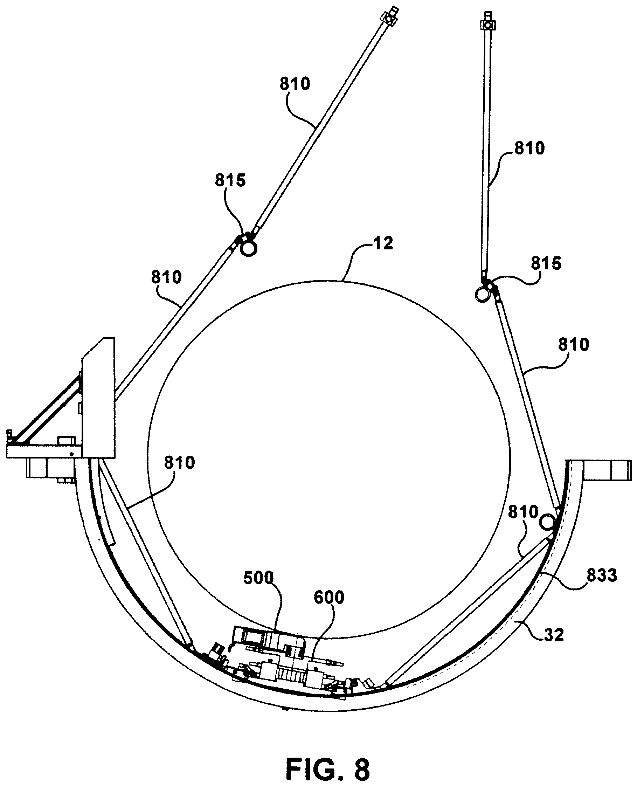

FIG. 8 illustrates a cross-sectional view of the tool 500 and skid 600 deployed under a rotor 12 in a compressor. The lower casing half 32 of the compressor contains a series of hook fit slots 833. The drill unit skid 600 slides or navigates along the hook fit slot 833 and may be positioned at any desired location beneath rotor 12. One or more extension arms 810 can be linked together with one or more couplings 815, and the arms 810 are connected to drill unit skid 600. The arms 810 can be manually manipulated to position the drill 500 and skid 600, or the arms can be moved or controlled with the assistance of a machine and/or controller.

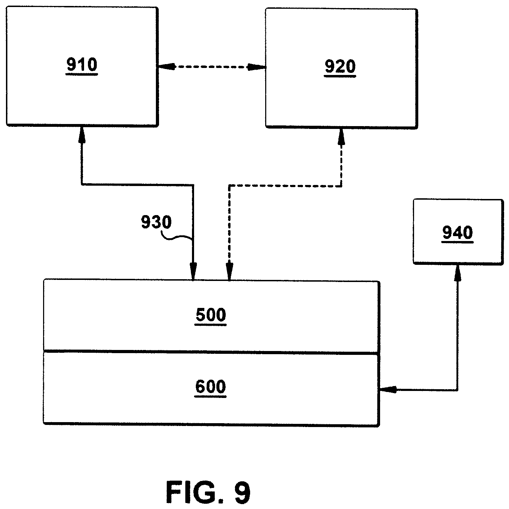

FIG. 9 illustrates a power and control system that may be used with drill 500 and/or drill unit skid 600. A power source or supply 910 is connected to tools 500 and/or 600 via connection lines 930. The power supply may include electrical power (e.g., AC and/or DC power), pneumatic power (e.g., compressed air), hydraulic power or any other suitable power source. The connection lines 930 may be any suitable device for the transmission of the power (e.g., conductive cables/wires, compressed air hoses/lines, etc.). A control system 920 may be used to control and/or actuate the power supply 910 and/or tools 500, 600, and may comprise computer control devices or manual control devices). In one example, the control device could be a laptop computer having a graphic interface allowing an operator to control the work process. In another example, the control device may be a simple set of manually operated switches or levers that activate or deactivate various features of the power supply 910 and/or tools 500, 600. The control system 920 may be connected to the power source 910 and/or the tools 500, 600 via any suitable communication medium (e.g., wired or wireless communication lines, cables, etc.). A vacuum system 940 may be connected to drill unit skid 600 or drill 500 to aid in the removal of cutting debris.

The method or process, using the tool of the present invention, begins with installing a mounting fixture to the left side horizontal joint utilizing an alignment block between the fixture and the hook fit of the case. This aligns the drill unit and the hook fit to feed the device into the "T" slot or hook fit of the compressor case.

Additionally, the mounting fixture sets the positioning of all holes (e.g., eight) that will be drilling into each half of the case during the process. The fixture does this by utilizing a hole that is located in the base of the fixture. This hole is used to define the location of the first hole to be drilled. Each subsequent hole will be based off of this first hole location. This is achieved by actuating a shot pin, on the drill unit, into the hole in the mounting fixture. The shot pin locates the position of the drill unit circumferentially to the hole being worked and the clamping cylinders provide an upward force to hold the drill in position in the hook fit during all operations (drilling the holes, back spot facing and tapping) during the process.

Prior to mounting the drill on the fixture a bit is installed into the drill. This bit is custom due to the length and machining necessary to lock into the bit chuck. Once installed, the unit is stroked for forward and reverse movement and rotation. Once proven, it is positioned on the mounting fixture. The fixture is equipped with a lock to suspend the drill prior to feeding it into the machine. This lock is utilized for a couple of reasons. The drill is heavy and by suspending it in this position it makes tool change over easier for the operator.

The operator unlocks and slides the drill unit into the hook fit and actuates the shot pin to locate the unit for the first hole position. The shot pin locates the drill unit by utilizing the hole located in the base of the drill mount. Once in the locating hole the operator actuates the hydraulic clamps to hold the drill up against the bottom side of the hook fit. This helps to ensure the unit does not slide or move during the drilling, spot facing and tapping operations. Once the drill is locked into position the operator can choose the function from the pendant that they want to perform. The operator can choose, drill, spot face or tap, advance and retract depending on what operation is needed. The first operation is drilling one of the holes. The operator drills the first hole and then uses this hole to locate the position of the next. This drilling operation is repeated until all eight holes have been drilled. Obviously, any number of holes may be drilled and more or less than eight holes could be chosen, based on the specific application.

Once all holes have been drilled the drill unit can be removed and the operator may select the spot face operation on the pendant. The split arbor is installed for the back spot facing operation. The arbor is split due to the limited amount of stroke range of the drilling unit. The first half of the split arbor is locked into the drill and the unit is fed into the hook fit the same way as during the drilling operation. Once the unit is at the first hole location and locked into place the drill is stroked or advanced to the full stroke so that the second half of the arbor can be attached. This is achieved by feeding the second half of the arbor through the hole that was previously drilled. Once in place the arbor is tightened using a cap screw. Next, the back spot face cutter is attached to the arbor. This arbor cutter arrangement is designed so that when the cutter is rotating (cutting) the rotational direction keeps it locked into position. The drill unit is then retracted to the "fully" retracted position. This is what sets the depth of the spot face drilling operation. When the unit is fully retracted the spot face is to the correct depth. This is an important depth since this surface sets the location of the load pin and the load pin to stator blade relationship. The drill is then advanced full stroke and the spot face cutter and arbor are removed. The unit is then unclamped and moved to the next hole location. This process can be repeated until all holes have been spot faced. Once all holes are spot faced the drill unit may be removed from the machine for a tooling change.

The next operation is the tapping of the holes. The operator selects the tapping operation on the pendant. The custom tap is loaded and locked into the drilling unit while the drill is suspended on the mounting fixture. The tap is designed to fit into the chuck and it pushes the tapping chips forward unlike a conventional tap. The drill is then fed into the machine and is advanced to the last (e.g., eighth) hole location to start the tapping process. The tapping operation is started at the last hole due to the shot pin requiring an untapped or smooth hole to locate from during the process. The tapping operation starts with the last hole and works backwards towards the first hole. Once the last hole is tapped the drill unit is pulled back to tap the next (e.g., seventh) hole. This is repeated until all holes have been tapped. The drill unit is then disassembled and mounted on the upper half casing where all operations can be repeated.

It will be appreciated that the removal of the upper casing half of the compressor to add, repair or upgrade the compressor does not require the removal of the rotor 12 from the lower casing half 32. This enables the compressor to be modified in the field or in situ.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A tool for use in at least one of drilling, tapping, back spot facing and counter-boring at least one hole in a casing of a dynamoelectric machine, said tool comprising:
a servo motor cutting device (510);
a gearbox (520); and
a drill unit skid (600), arranged for supporting said servo motor cutting device (510) and said gearbox (520), the drill unit skid (600) comprising:
a manifold (610);
a drill stroke actuator (630);
at least one hook fit slide (640) for engaging a hook fit slot (833) in a casing of a dynamoelectric machine,
wherein the at least one hook fit slide or foot (640) is sized so that there is enough clearance for the sliding motion needed but not enough to allow the unit to escape the hook fit area in the radial or axial directions; and
power supply means (910) for powering said tool;
wherein said servo motor cutting device (501) and said gearbox (520) rotate a cutting tool to create said at least one hole,
**characterised in that** the at least one hook fit slide (640) for engaging a hook fit slot (833) in a casing of a dynamoelectric machine comprises clamping actuators to apply a radial inward force on the tool against the hook fit slot (833).

2. The tool of claim 1, wherein the servo motor cutting device (510) is at least one of electrically powered, hydraulically powered and pneumatically powered.

3. The tool of claim 1 or 2, wherein said drill stroke actuator (630) is at least one of electrically powered, hydraulically powered and pneumatically powered.

4. The tool of claim 1 to 3, said power supply means (910) comprising at least one of compressed air, a hydraulic system and a pneumatic system.

5. The tool of any of claims 1 to 4, wherein said dynamoelectric machine is chosen from one or more of:
a compressor, a gas turbine and a steam turbine.

6. The tool of any of claims 1 to 5, further comprising a vacuum port (650) for connecting to a vacuum system (940), said vacuum port for aiding in removal of cutting debris.

7. The tool of any of claims 1 to 6, wherein said at least one hole is drilled for a load dam pin.

8. The tool of any of claims 1 to 7, wherein said tool is used to drill, tap, back spot face and counter-bore said at least one hole for said load dam pin.

## Patentansprüche

1. Werkzeug zur Verwendung für mindestens eines von Bohren, Gewindeschneiden, Rückwärtsplansenken und Senkbohren von mindestens einem Loch in ein Gehäuse einer dynamoelektrischen Maschine, wobei das Werkzeug umfasst:
eine Servomotor-Schneidvorrichtung (510);
ein Getriebe (520); und
einen Bohreinheitschlitten (600), der zum Tragen der Servomotor-Schneidvorrichtung (510) angeordnet ist,
und wobei das Getriebe (520) und der Bohreinheitschlitten (600) umfassen:
einen Verteiler (610);
einen Bohrhubaktuator (630);
mindestens einen Hakenpassschieber (640) zum Eingreifen in einen Hakenpassschlitz (833) in einem Gehäuse einer dynamoelektrischen Maschine,
wobei der mindestens eine Hakenpassschieber oder -fuß (640) so bemessen ist, dass es genug Spielraum für die erforderliche Verschiebebewegung gibt, aber nicht so viel, um die Einheit in radialer oder axialer Richtung aus dem Hakenpassbereich entweichen zu lassen; und
eine Energieversorgungseinrichtung (910) zum Antreiben des Werkzeugs;
wobei die Servomotor-Schneidvorrichtung (501) und das Getriebe (520) ein Schneidwerkzeug drehen, um das mindestens eine Loch zu erzeugen,
**dadurch gekennzeichnet, dass**
der mindestens eine Hakenpassschieber (640) zum Eingreifen in einen Hakenpassschlitz (833) in einem Gehäuse einer dynamoelektrischen Maschine Klemmaktuatoren umfasst, um eine radial nach innen gerichtete Kraft auf das Werkzeug gegen den Hakenpassschlitz (833) auszuüben.

2. Werkzeug nach Anspruch 1, wobei die Servomotor-Schneidvorrichtung (510) mindestens eine von elektrisch angetriebenen, hydraulisch angetriebenen und pneumatisch angetriebenen ist.

3. Werkzeug nach Anspruch 1 oder 2, wobei der Bohrhubaktuator (630) mindestens einer von elektrisch angetriebenen, hydraulisch angetriebenen und pneumatisch angetriebenen ist.

4. Werkzeug nach Anspruch 1 bis 3, wobei die Energieversorgungseinrichtung (910) mindestens eine von Druckluft, einem Hydrauliksystem und einem Pneumatiksystem umfasst.

5. Werkzeug nach einem der Ansprüche 1 bis 4, wobei die dynamoelektrische Maschine ausgewählt ist unter einem oder mehreren von einem Verdichter, einer Gasturbine und einer Dampfturbine.

6. Werkzeug nach einem der Ansprüche 1 bis 5, weiter umfassend einen Vakuumanschluss (650) zum Verbinden mit einem Vakuumsystem (940), wobei der Vakuumanschluss die Entfernung von Schneidabfall unterstützt.

7. Werkzeug nach einem der Ansprüche 1 bis 6, wobei das mindestens eine Loch für einen Lastdammbolzen gebohrt wird.

8. Werkzeug nach einem der Ansprüche 1 bis 7, wobei das Werkzeug zum Bohren, Gewindeschneiden, Rückwärtsplansenken und Senkbohren des mindestens einen Lochs für den Lastdammbolzen verwendet wird.

## Revendications

1. Outil pour utilisation dans au moins l'un du perçage, du taraudage, du lamage en remontant et du chambrage d'au moins un trou dans un carter d'une machine dynamoélectrique, ledit outil comprenant :
un dispositif de coupe à servomoteur (510) ;
un train d'engrenages (520) ; et
un châssis mobile pour unité de perçage (600), agencé pour supporter ledit dispositif de coupe à servomoteur (510) et ledit train d'engrenages (520), le châssis mobile pour unité de perçage (600) comprenant :
un collecteur (610) ;
un actionneur de course de perçage (630) ;
au moins une coulisse d'ajustement de crochet (640) pour venir en prise avec une fente d'ajustement de crochet (833) dans un carter d'une machine dynamoélectrique,
dans lequel l'au moins un(e) coulisse ou pied d'ajustement de crochet (640) est dimensionné(e) de sorte qu'il existe un jeu suffisant pour le mouvement de coulissement nécessaire mais pas suffisant pour permettre à l'unité de s'échapper de la zone d'ajustement de crochet dans les directions radiale ou axiale ; et
des moyens d'alimentation en énergie (910) pour alimenter ledit outil ;
dans lequel ledit dispositif de coupe à servomoteur (501) et ledit train d'engrenages (520) mettent en rotation un outil de coupe pour créer ledit au moins un trou,
**caractérisé en ce que** l'au moins une coulisse d'ajustement de crochet (640) pour venir en prise avec une fente d'ajustement de crochet (833) dans un carter d'une machine dynamoélectrique comprend des actionneurs de serrage pour appliquer une force radiale vers l'intérieur sur l'outil contre la fente d'ajustement de crochet (833).

2. Outil selon la revendication 1, dans lequel le dispositif de coupe à servomoteur (510) est au moins l'un de à alimentation électrique, à alimentation hydraulique et à alimentation pneumatique.

3. Outil selon la revendication 1 ou 2, dans lequel ledit actionneur de course de perçage (630) est au moins l'un de à alimentation électrique, à alimentation hydraulique et à alimentation pneumatique.

4. Outil selon la revendication 1 à 3, lesdits moyens d'alimentation en énergie (910) comprenant au moins l'un d'air comprimé, d'un système hydraulique et d'un système pneumatique.

5. Outil selon l'une quelconque des revendications 1 à 4, dans lequel ladite machine dynamoélectrique est choisie parmi un ou plusieurs de :
un compresseur, une turbine à gaz et une turbine à vapeur.

6. Outil selon l'une quelconque des revendications 1 à 5, comprenant en outre un orifice de vide (650) pour le raccordement à un système de vide (940), ledit orifice de vide étant destiné à faciliter le retrait des débris de coupe.

7. Outil selon l'une quelconque des revendications 1 à 6, dans lequel ledit au moins un trou est percé pour une broche de retenue de charge.

8. Outil selon l'une quelconque des revendications 1 à 7, dans lequel ledit outil est utilisé pour percer, tarauder, lamer en remontant et chambrer ledit au moins un trou pour ladite broche de retenue de charge.
